# FASCICULE DE BREVET EUROPEEN

(11) **EP 0 779 610 B1**
(45) Date de publication et mention de la délivrance du brevet: **11.09.2002**
(21) Numéro de dépôt: 96402717.1
(22) Date de dépôt: 12.12.1996
(51) Int. Cl.: G11B 5/00, G11B 5/39

(54) **Dispositif d'enregistrement à micropointe recouverte d'une multicouche magnétorésistive**
Aufzeichnungsvorrichtung mit Mikrospitze mit mehrschichtigem magnetoresistivem Überzug
Recording device with microtip covered by magnetoresistive multilayer

(30) Priorité: 15.12.1995 FR 9514897
(43) Date de publication de la demande: 18.06.1997
(73) Titulaire: COMMISSARIAT A L'ENERGIE ATOMIQUE, 75015 Paris (FR)
(72) Inventeur: Daval, Jacques, 38240 Meylan (FR); Bechevet, Bernard, 38640 Claix (FR)
(74) Mandataire: Signore, Robert

(56) Documents cités:
- EP-A- 0 467 737
- EP-A- 0 551 814
- EP-A- 0 644 529
- WO-A-89/07256
- WO-A-92/14250
- US-A- 4 358 806
- US-A- 5 301 079
- US-A- 5 323 377
- IBM TECHNICAL DISCLOSURE BULLETIN, vol. 34, no. 7B, 1 Décembre 1991, ARMONK, N.Y., US, pages 365-367, XP000282610 "HIGH DENSITY MAGNETIC STORAGE USING AN ATOMIC FORCE MICROSCOPE WITH OPTICAL DETECTION"
- IBM TECHNICAL DISCLOSURE BULLETIN, vol. 34, no. 3, Août 1991, ARMONK, N.Y., US, pages 124-125, XP000210469 "METHOD FOR CREATING THREE-DIMENSIONAL MICROSTRUCTURES"
- IBM TECHNICAL DISCLOSURE BULLETIN, vol. 37, no. 5, Mai 1994, ARMONK, N.Y., US, pages 501-502, XP000453238 "High-Density Magnetic Recording Device by Using SXM Mechanism and Media with Discrete Cells"

## Description

### Domaine technique

La présente invention a pour objet un dispositif d'enregistrement à micropointe recouverte d'une couche magnétorésistive.

L'invention trouve des applications dans l'enregistrement d'informations sur un support, ce qui peut être utilisé en télévision ou dans les mémoires d'ordinateur.

### Etat de la technique antérieure

L'enregistrement d'informations au moyen d'une micropointe agissant sur un support approprié est déjà connu. Par micropointe, on entend ici une pointe mécanique (et non optique) dont la taille est inférieure à environ un micromètre. Ces pointes sont en général conductrices de l'électricité. Un courant circulant entre une telle pointe et un support provoque un échauffement local de celui-ci qui peut entraîner une modification de sa structure, et, par exemple, le faire passer d'un état cristallin à un état amorphe. C'est l'opération d'écriture. La mesure ultérieure de la caractéristique du matériau, par exemple sa conductivité, constitue l'opération de lecture.

Cette technique est baptisée "enregistrement à changement de phase". La pointe utilisée est alors une pointe du genre de celles qu'on trouve dans les sondes de microscopie atomique ("Atomic Force Microscope" en anglais, ou AFM en abrégé).

Une autre technique consiste à utiliser un support d'enregistrement avec un film magnétique et une sonde du genre de celles qu'on trouve dans les microscopes à balayage par effet tunnel ("Scanning Tunneling Microscope" en anglais ou STM). Une impulsion de courant passe encore dans la pointe et à travers le film magnétique. Le matériau magnétique s'échauffe par effet Joule. Un champ magnétique permanent est appliqué par des moyens extérieurs et permet de créer une aimantation ayant une certaine direction. Si l'on chauffe le film au-dessus de la température de Curie du matériau, l'aimantation initiale est détruite.

A la lecture, le point ainsi traité se distingue de ses voisins par la direction de son aimantation.

Selon encore un autre mécanisme, on peut employer une micropointe magnétique et utiliser le champ magnétique de fuite de la pointe, en combinaison avec un champ extérieur, pour produire dans le film magnétique un champ supérieur au champ coercitif du matériau et imposer ainsi une nouvelle orientation de l'aimantation. La lecture consiste alors à détecter l'orientation du champ magnétique dans le film. Cette détection peut s'effectuer de manière optique, en mesurant la rotation du plan de polarisation d'un faisceau laser.

La publication IBM Technical Disclosure Bulletin, Vol. 34, N°7B, 12/1991, pages 365 - 367, la demande EP-A-0 644 529 et la publication IBM Technical Disclosure Bulletin Vol. 34, N°3 08/1991, pages 124-125 décrivent l'état de la technique reflété dans le préambule de la revendication 1.

Bien que donnant satisfaction à certains égards, les dispositifs de l'art antérieur utilisant des micropointes magnétiques présentent des inconvénients, notamment en raison des difficultés de réalisation et du manque de sensibilité.

La présente invention a justement pour but de remédier à ces inconvénients.

### Exposé de l'invention

A cette fin, l'invention propose un dispositif d'enregistrement dans lequel la micropointe est d'un type particulier, simple à réaliser et d'une grande sensibilité. Selon l'invention, la micropointe est constituée d'une pointe amagnétique recouverte d'une multicouche magnétorésistive. Une telle multicouche possède une résistance R dont la valeur change d'une quantité ΔR pour toute variation du champ magnétique. Il est donc possible de mesurer les variations du champ magnétique lorsque la micropointe parcourt la surface du support d'enregistrement et cela par la mesure de la variation ΔR de la résistance de la micropointe. Cette mesure est classique et ne nécessite que des moyens ordinaires (générateur de courant ou de tension, moyen de mesure de tension ou de courant). En écriture, un courant circule dans la multicouche, sous forme d'impulsion par exemple, et ce courant pénètre dans le support d'enregistrement où il crée un échauffement local du matériau pour amener sa température à une valeur supérieure à la température de Curie. Par l'application simultanée d'un champ magnétique, on peut écrire ainsi un bit d'information dans le support. Selon l'invention, la multicouche magnétorésistive sert donc aussi bien à la lecture qu'à l'écriture.

De façon précise, la présente invention a pour objet un dispositif d'enregistrement comprenant :
- au moins une micropointe,
- un support d'enregistrement possédant un film magnétique ayant localement une certaine aimantation,
- des moyens de déplacement relatif de la micropointe et du support,
- des moyens d'écriture aptes à échauffer le film magnétique et à modifier la direction de l'aimantation d'une zone du film placée en regard d'une pointe,
- des moyens de lecture aptes à déterminer le sens de l'aimantation de la zone située en regard de la micropointe,
ce dispositif étant caractérisé par le fait que la micropointe est en matériau amagnétique et est recouverte d'une multicouche magnétorésistive, les moyens de lecture étant aptes à mesurer la variation de résistance de la multicouche magnétorésistive et les moyens d'écriture aptes à faire circuler un courant à travers la multicouche magnétorésistive et dans le film magnétique.

De préférence, la couche magnétorésistive est une multicouche.

### Brève description des dessins

- la figure 1 rappelle la structure d'un dispositif d'enregistrement à micropointe,
- la figure 2A illustre schématiquement l'opération d'écriture et la figure 2B l'opération de lecture selon l'invention,
- la figure 3 montre, en coupe, une micropointe selon l'invention,
- la figure 4A montre un exemple de multicouche magnétorésistive et la figure 4B un diagramme de variation relative de la résistance en fonction du champ magnétique appliqué.

### Exposé détaillé de modes de réalisation

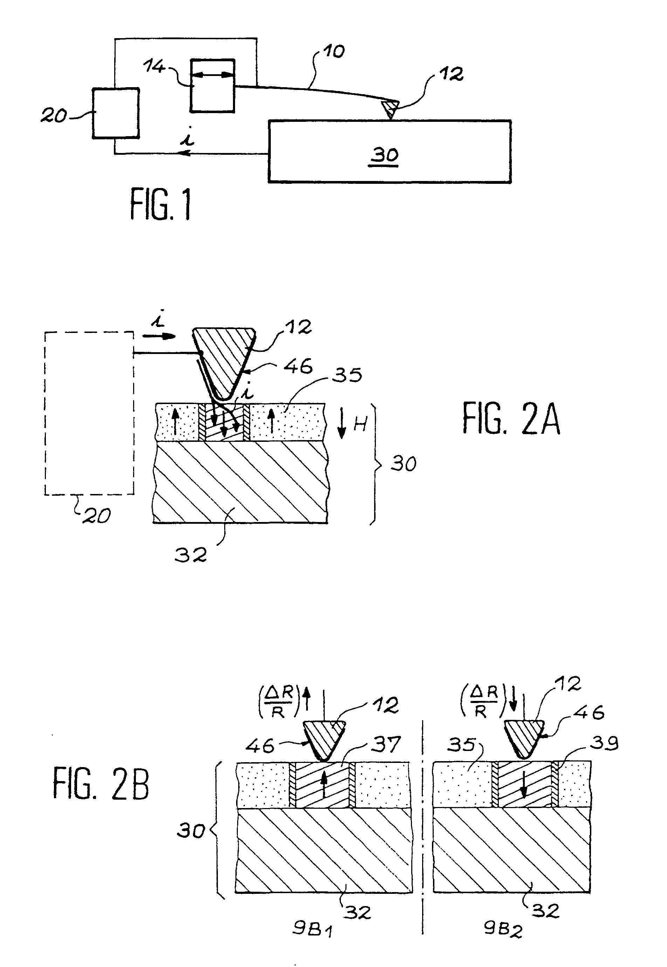

La figure 1 montre un dispositif d'enregistrement comprenant, à l'extrémité d'un bras flexible 10, une micropointe 12, l'ensemble pouvant se déplacer dans une ou deux directions grâce à des moyens 14. Un circuit d'alimentation et de mesure 20 est relié au bras 10. Un support d'enregistrement 30 est placé sous la micropointe 12. L'écriture s'effectue point par point sur le support, en déplaçant la pointe après chaque écriture. La lecture s'effectue elle aussi point par point avec déplacement latéral.

Les figures 2A et 2B illustrent les opérations d'écriture et de lecture dans le cas de l'invention. Sur la figure 2A, on voit une pointe amagnétique 12 recouverte d'une multicouche magnétorésistive 46. Cette pointe est déposée en regard d'un support d'enregistrement 30 constitué par un substrat 32 recouvert d'un film magnétique 35. Un champ magnétique extérieur H est constamment appliqué. L'aimantation de la couche 35 peut être soit parallèle au champ magnétique H, soit antiparallèle. Cette aimantation est obtenue en faisant circuler un courant i dans la multicouche 46 et dans la couche 35. Ce courant provoque un échauffement local dans le film 35 qui porte la température de celui-ci au-delà de la température de Curie. L'application du champ extérieur H impose alors un champ magnétique de même sens dans le film.

Pour lire un tel support, on détecte, selon une caractéristique de l'invention, le champ de fuite du support d'enregistrement à l'aide de la multicouche magnétorésistive. Sa variation de résistance relative, soit ΔR/R est positive ou négative, selon que l'aimantation du film 35 en regard de la pointe est orientée dans un sens ou dans l'autre. Sur la figure 2B, on voit ainsi deux zones 37 et 39 où les aimantations sont de sens opposés et où les variations de ΔR/R dans la multicouche 46 sont, elles aussi, opposées.

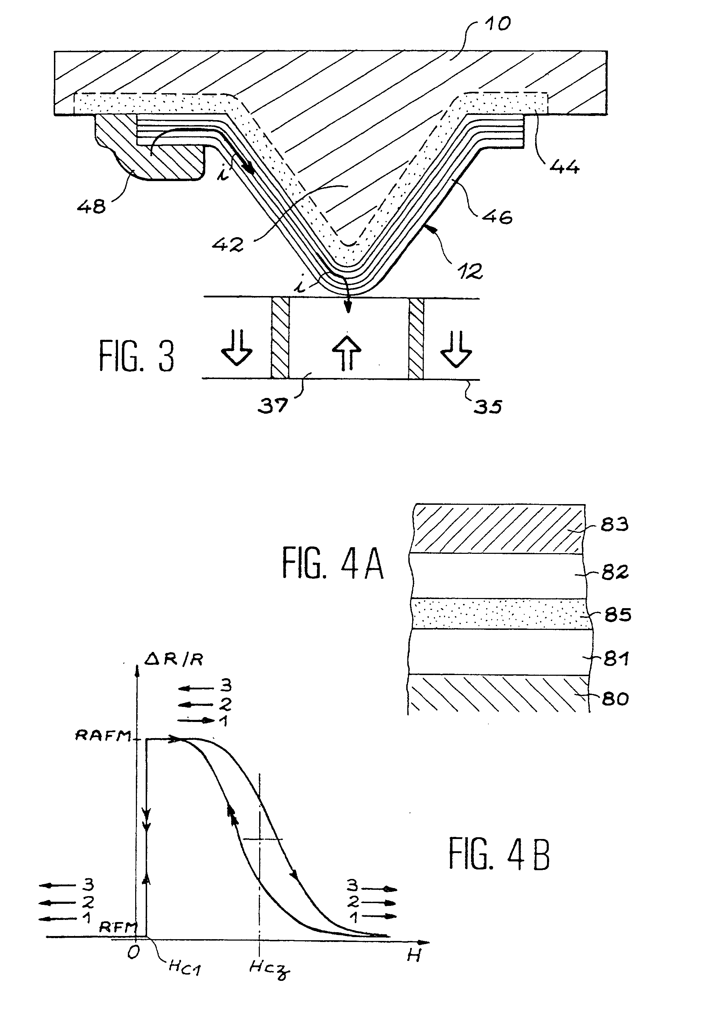

La figure 3 montre de manière plus détaillée la structure de la pointe avec sa multicouche magnétorésistive. Dans l'exemple illustré, le bras 10 peut être par exemple, en partie, en silicium avec une partie gravée selon les plans cristallographiques du silicium pour former une micropointe amagnétique pyramidale 42. Sur cette micropointe a été déposée une couche isolante 44, par exemple en SiO₂ ou en Si₃N₄, cette couche étant elle-même recouverte d'une multicouche magnétorésistive 46. A la base de chaque micropointe se trouve un plot de contact 48 pour une connexion électrique, qui va permettre d'injecter le courant i nécessaire à l'écriture.

De préférence, la couche magnétorésistive 46 est une multicouche du type vanne de spin ("spin-valve"), dite aussi magnétorésistance géante. Les couches peuvent être, par exemple, un empilement de NiFe/Cu/NiFe/FeMn/Fe.

Les figures 4A et 4B permettent de mieux comprendre le fonctionnement d'une telle micropointe à magnétorésistance multicouche. La magnétorésistance est représentée fonctionnellement sur la figure 4A avec un substrat 80, une couche 81 en un premier matériau magnétique doux, une deuxième couche 85 isolante, une troisième couche 82 en deuxième matériau magnétique doux et, enfin, une couche 83 en un troisième matériau magnétique de type antiferromagnétique.

Les variations de résistance relative ΔR/R sont représentées sur la figure 4B en fonction du champ magnétique H appliqué, lequel provient du support d'enregistrement. Les flèches référencées 1, 2 et 3 correspondent aux aimantations dans les couches 81, 82 et 83 représentées sur la Figure 4A. Lorsque le champ est fort ou négatif, les trois aimantations sont parallèles (plage ferromagnétique FM). Dans la plage médiane, l'aimantation de la couche 81 est antiparallèle à celle des autres (plage antiferromagnétique AFM). Le cycle de ΔR/R en fonction de H présente alors une forme en marche d'escalier avec un ΔR/R qui bascule brusquement d'une valeur R_{FM} à une autre R_{AFM} autour d'un champ critique Hc₁ faible et légèrement positif, (0<Hc₁<1 Oerstedt) (1 Oerstedt = 79.5 A/m). Le champ de fuite du milieu d'enregistrement est au moins égal à ce champ critique Hc₁ ; la variation ΔR/R est lue par la magnétorésistance.

L'invention qui vient d'être décrite peut être utilisée quels que soient la structure et le nombre de micropointes. Elle peut être utilisée en particulier dans un dispositif qui comprendrait une pluralité de micropointes réparties en lignes ou en matrice.

## Revendications

1. Dispositif d'enregistrement comprenant :
- au moins une micropointe (12),
- un support d'enregistrement (30) possédant un film magnétique (35) ayant une certaine aimantation,
- des moyens de déplacement relatif (14) de la micropointe (12) et du support (30),
- des moyens d'écriture (20) aptes à échauffer le film magnétique et à modifier la direction de l'aimantation d'une zone (37, 39) du film (35) placée en regard d'une micro pointe,
- des moyens de lecture (20) aptes à déterminer le sens de l'aimantation de la zone (37, 39) située en regard de la micropointe (12),
ce dispositif étant **caractérisé par le fait que** la micropointe (12) est en matériau amagnétique et est recouverte d'une multicouche magnétorésistive (46), les moyens de lecture étant aptes à mesurer la variation ΔR/R de résistance relative de la multicouche magnétorésistive (46) et les moyens d'écriture aptes à faire circuler un courant (i) à travers la multicouche magnétorésistive (46) et dans le film magnétique (35).

2. Dispositif selon la revendication 1, **caractérisé par le fait que** la multicouche magnétorésistive (46) est du type à vanne de spin.

## Patentansprüche

1. Aufzeichnungsvorrichtung, umfassend:
- wenigstens eine Mikrospitze (12),
- einen Aufzeichnungsträger (30) mit einem magnetischen Film (35), der eine bestimmte Magnetisierung aufweist,
- Relatiwerschiebungseinrichtungen (14) der Mikrospitze (12) und des Trägers (30),
- Schreibeinrichtungen (20), fähig den magnetischen Film zu erwärmen und die Magnetisierungsrichtung einer Zone (37, 39) des Films (35) zu modifizieren, die einer Mikrospitze gegenübersteht,
- Leseeinrichtungen (20), fähig die Magnetisierungsrichtung der Zone (37, 39) zu bestimmen, die der Mikrospitze (12) gegenübersteht,
wobei diese Vorrichtung **dadurch gekennzeichnet ist, dass** die Mikrospitze (12) aus einem unmagnetischen Material ist, mit einer magnetoresistiven Multischicht (46) überzogen ist und die Leseeinrichtungen dabei fähig sind, die Veränderung ΔR/R des relativen Widerstands der magnetoresitiven Multischicht (46) und der Schreibeinrichtungen zu messen, und die Schreibeinrichtungen fähig sind, einen Strom (i) durch die magnetoresitive Multischicht (46) und in den magnetischen Film (35) fließen zu lassen.

2. Vorrichtung nach Anspruch 1, **dadurch gekennzeichnet, dass** die magnetorisitive Multischicht (46) vom Typ Spin-Ventil ("spin valve") ist.

## Claims

1. Recording device comprising:
- at least one microstylus (12),
- a recording support (30) possessing a magnetic film (35) having a certain magnetization,
- means of relative movement (14) of the microstylus (12) and the support (30),
- writing means (20) capable of heating the magnetic film and of modifying the magnetization direction of a zone (37, 39) of the film (35) placed facing a stylus,
- reading means (20) capable of determining the magnetization direction of the zone (37, 39) located facing the microstylus (12),
this device being **characterized in that** the microstylus (12) is in nonmagnetic material and is covered by a magnetoresistive multilayer (46), the reading means being capable of measuring the relative resistance variation ΔR/R of the magnetoresistive multilayer (46), and the writing means being capable of circulating a current (i) through the magnetoresistive multilayer (46) and into the magnetic film (35).

2. Device according to claim 1, **characterized in that** the magnetoresistive multilayer (46) is of the spin-valve type.
